# EUROPEAN PATENT SPECIFICATION

(11) **EP 2 255 955 B1**
(45) Date of publication and mention of the grant of the patent: **16.07.2014**
(21) Application number: 10164350.0
(22) Date of filing: 28.05.2010
(51) Int. Cl.: B29C 65/52, A41H 43/04, D06H 5/00, A41D 27/24

(54) **Cloth bonding apparatus**
Vorrichtung zum Verbinden vom Stoff
Appareil de liaison de tissus

(30) Priority: 28.05.2009 JP 2009128537
(43) Date of publication of application: 01.12.2010
(73) Proprietor: Brother Kogyo Kabushiki Kaisha, Nagoya-shi, Aichi 467-8561 (JP)
(72) Inventor: Umeda, Kazutoshi, Nagoya-shi Aichi 467-8562 (JP); Yamaura, Hiroki, Nagoya-shi Aichi 467-8562 (JP); Iwakoshi, Hiroyasu, Nagoya-shi Aichi 467-8562 (JP); Enya, Tetsuji, Nagoya-shi Aichi 467-8562 (JP); Nishimura, Kazuto, Nagoya-shi Aichi 467-8562 (JP)
(74) Representative: Prüfer & Partner GbR European Patent Attorneys

(56) References cited:
- WO-A1-01/89812
- US-A- 2 962 082
- US-A1- 2003 010 439

## Description

### BACKGROUND

The present invention relates to a cloth bonding apparatus. More specifically, the present invention relates to a cloth bonding apparatus that includes a valve provided in a channel which supplies an adhesive to a nozzle.

A bonding apparatus is directed for bonding cloths with an adhesive, instead of sewing the cloths with a needle and a thread. By bonding the cloths with the adhesive, the bonding apparatus can eliminate unevenness due to the thread that may be formed in the cloth surfaces when the cloths are sewn with the thread. The cloth surfaces processed by the bonding apparatus are smooth. Thus, the bonding apparatus is capable of manufacturing clothes and the like which are free from discomfort caused by unevenness.

The bonding apparatus supplies an adhesive from a storage chamber to a nozzle, and discharges the adhesive from the nozzle. The adhesive discharged from the nozzle adheres onto one of cloths. The worker then places another cloth onto top of the cloth on which the adhesive has been applied. The bonding apparatus presses the cloths in a pressurized manner. The cloths are thus bonded together.

For example, with a bonding apparatus described in Japanese Patent Application Laid-Open Publication No. Hei 5-42679, an adhesive flows from a storage chamber to a nozzle via a channel and is discharged from the nozzle. The channel is provided with a pump mechanism. The bonding apparatus can discharge an appropriate amount of adhesive from the nozzle by controlling the pump mechanism. A valve that can open and close the channel is provided in the vicinity of the nozzle. The bonding apparatus can rapidly and accurately stop discharging the adhesive at a desired timing by controlling the valve.

Document US 2003/010439 A1 discloses a cloth bonding apparatus comprising a nozzle through which an adhesive is dischargeable onto a cloth, a storage chamber that is adapted to store the adhesive therein, a channel through which the adhesive stored in the storage chamber is supplied to the nozzle, a pump mechanism adapted to supply the adhesive stored in the storage chamber through the channel to the nozzle and a downstream valve that is provided at a downstream side of the pump mechanism.

Document WO 01/89812 A1 discloses a cloth bonding apparatus comprising a nozzle through which an adhesive is dischargeable onto a cloth, a storage chamber that is adapted to store the adhesive therein, a channel through which the adhesive stored in the storage chamber is supplied to the nozzle, a pump mechanism provided in the channel and adapted to supply the adhesive stored in the storage chamber through the channel to the nozzle.

Document US 2 962 082 A also discloses a cloth bonding apparatus. This cloth bonding apparatus comprises a nozzle through which an adhesive is dischargeable onto a cloth, a storage chamber that is adapted to store the adhesive therein, a channel through which the adhesive stored in the storage chamber is supplied to the nozzle and a pump mechanism adapted to supply the adhesive stored in the storage chamber through the channel to the nozzle, and a downstream valve that is provided at a downstream side of the pump mechanism.

### SUMMARY

In the bonding apparatus, the pump mechanism may have a low accuracy. In this case, the adhesive flows from an upstream side to a downstream side in the pump mechanism even if the pump mechanism stops being driven. Thus, a pressure inside the channel may be unstable. Under an unstable pressure, the amount of adhesive to be discharged may be unstable when the bonding apparatus next starts to discharge the adhesive, Thus, an appropriate amount of adhesive cannot be discharged from the nozzle.

An object of the present invention is to provide a cloth bonding apparatus that can stabilize a pressure inside a channel and discharge an appropriate amount of adhesive from a nozzle.

The cloth bonding apparatus according to the present invention include a nozzle through which an adhesive is dischargeable onto a cloth, a storage chamber that is adapted to store the adhesive therein, a channel through which the adhesive stored in the storage chamber is supplied to the nozzle, a pump mechanism that is provided in the channel and adapted to supply the adhesive stored in the storage chamber through the channel to the nozzle, a downstream valve that is provided at a downstream side of the pump mechanism in the channel, an upstream valve that is provided at an upstream side of the pump mechanism in the channel, an input portion through which an instruction of enabling or disabling a discharge of the adhesive from the nozzle is input, a first control portion that, in a case where the instruction of enabling the discharge of the adhesive is input through the input portion, controls the downstream valve and the upstream valve to open the channel and controls the pump mechanism thereby supplying the adhesive to the nozzle, and a second control portion that, in a case where the instruction of disabling the discharge of the adhesive is input through the input portion, controls the downstream valve and the upstream valve to close the channel and controls the pump mechanism thereby stopping supplying the adhesive to the nozzle.

In the cloth bonding apparatus, the upstream valve and the downstream valve close the channel to stop the discharge of the adhesive. The cloth bonding apparatus also stops driving the pump mechanism. Therefore, the cloth bonding apparatus can keep the pressure inside the channel constant. Thus, when next starting the discharge of the adhesive, the cloth bonding apparatus can discharge an appropriate amount of adhesive.

The cloth bonding apparatus may further comprise an actuator that opens and closes a cartridge valve that is provided in a cartridge which is filled with the adhesive and which is housed in the storage chamber, wherein the upstream valve is configured as the cartridge valve, and the first control portion and the second control portion open and close the channel, respectively by controlling the actuator to open and close the cartridge valve,. In this case, the cartridge valve can be used as the upstream valve. Thus, the cloth bonding apparatus does not need a separate valve at the upstream side of the pump mechanism.

The cloth bonding apparatus may further comprise an actuator that drives at least one of the upstream valve and the downstream valve. In this case, the cloth bonding apparatus can control the actuator to drive for opening and closing at least one of the upstream valve and the downstream valve, thereby to be able to open and close the channel.

In the cloth bonding apparatus, the actuator may be an air cylinder. In this case, the cloth bonding apparatus can open and close the channel by controlling the air cylinder.

In the cloth bonding apparatus, wherein the pump mechanism may be a gear pump. In this case, the cloth bonding apparatus can drive the gear pump thereby to be able to discharge the appropriate amount of adhesive from the nozzle.

The cloth bonding apparatus may further comprises, a measuring portion that measures an elapsed time after the instruction of disabling to the discharge of the adhesive is input through the input portion, and a time setting portion that sets a time after the instruction of disabling the discharge of the adhesive is input through the input portion until the upstream valve closes the channel, wherein the second control portion may control the upstream valve to close the channel when the elapsed time measured by the measuring portion reaches the time set by the time setting portion. In this case, the cloth bonding apparatus can set the time up to the closing of the channel by the upstream valve after the worker has input the instruction to stop discharging the adhesive.

### BRIEF DESCRIPTION OF THE DRAWINGS

Fig. 1 is a perspective view of an entire cloth bonding apparatus 1;
Fig. 2 is a perspective view of a bonding machine 2;
Fig. 3 is a front view of the bonding machine 2;
Fig. 4 is a left side view of the bonding machine 2;
Fig. 5 is a perspective view of the internal configuration of the bonding machine 2;
Fig. 6 is a cross-sectional view of a storage chamber 18, a pump casing 14 and a support portion 16 when the bonding machine 2 is viewed from its left side;
Fig. 7 is a cross-sectional view of the storage chamber 18, the pump casing 14 and the support portion 16 when the bonding machine 2 is viewed from its left side;
Fig. 8 is a perspective view of the vicinity of a nozzle 17 during a bonding work;
Fig. 9 is a block diagram showing an electric configuration of the cloth bonding apparatus 1;
Fig. 10 is a flow chart showing a cloth bond processing;
Fig. 11 is a flow chart showing a time set processing;
Fig. 12 is a perspective view of a bonding machine 5;
Fig. 13 is a cross-sectional view of the storage chamber 18, the pump casing 14 and the support portion 16 when the bonding machine 5 is viewed from its left side; and
Fig. 14 is a cross-sectional view of the storage chamber 18, the pump casing 14 and the support portion 16 when the bonding machine 5 is viewed from its left side.

### DESCRIPTION OF THE PREFERRED EMBODIMENTS

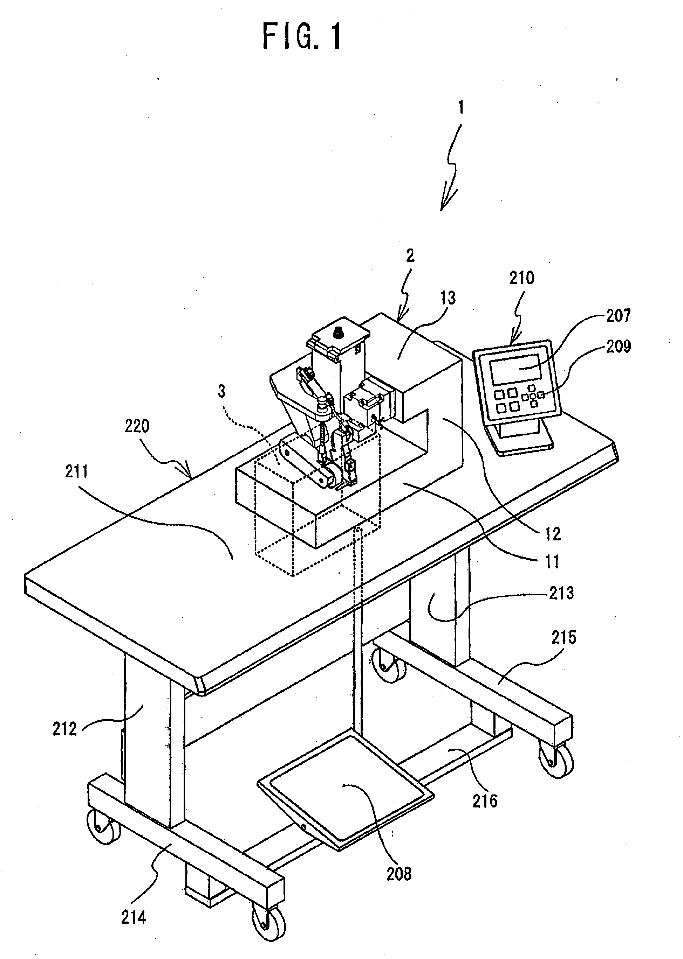

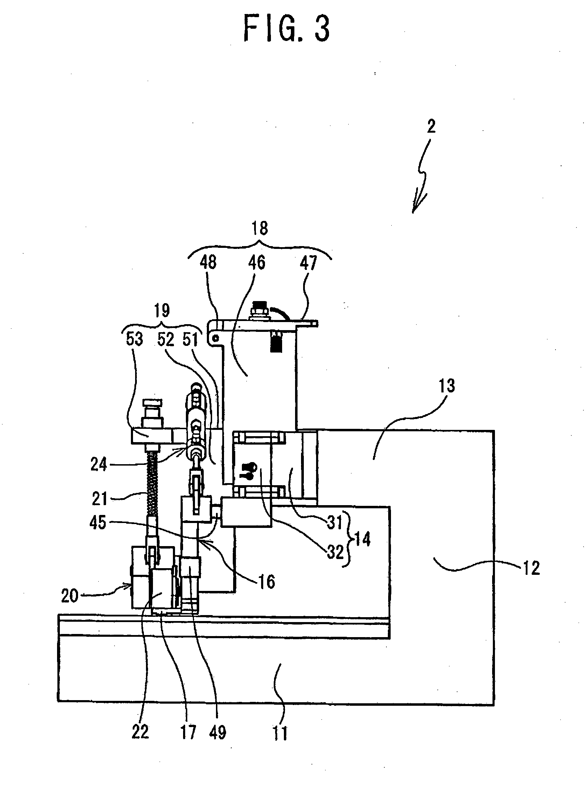

A cloth bonding apparatus 1 according to the present invention will be described below with reference to the drawings. A configuration of the cloth bonding apparatus 1 will be described with reference to Figs. 1 to 4. In the following description, it is defined that the upper side, the lower side, the right side, the left side, the front face side, and the back face side of the bonding machine 2 shown in Fig. 3 are the upper side, the lower side, the right side, the left side, the front side, and the back side of a bonding machine 2, respectively.

An overall configuration of the cloth bonding apparatus 1 will be described with reference to Fig. 1. As shown in Fig. 1, the cloth bonding apparatus 1 includes a bonding machine 2 and a table 220. The bonding machine 2 is fixed to the table 220. The bonding machine 2 applies an adhesive between two layers of cloths arranged oppositely, and presses and feeds the cloths. The two layers of cloths are bonded together through the above operation of the bonding machine 2. A configuration of the bonding machine 2 will be described later in detail.

The table 220 includes a top board 211, left and right leg portions 212, 213, left and right support portions 214, 215, and a foot holder 216. The bonding machine 2 is fixed on the top board 211. The top board 211 has a rectangular plate shape in a plan view, with the right-and-left direction as its longitudinal direction.

The top board 211 has an operation panel 210 on the right side of a position where the bonding machine 2 is fixed. The operation panel 210 includes a liquid crystal display (LCD) portion 207 and a plurality of keys 209. The LCD portion 207 displays various items of information thereon. The keys 209 are directed for inputting various items of information. A worker may set various operations of the bonding machine 2 by operating the keys 209 while looking at the LCD portion 207.

The left leg portion 212 having a plate shape extends vertically downwards from the left end of the top board 211. The right leg portion 213 having a plate shape extends vertically downwards from the right end of the top board 211. The left support portion 214 is connected to the lower end of the left leg portion 212. The right support portion 215 is connected to the lower end of the right leg portion 213. The left support portion 214 and the right support portion 215 each are substantially prismatic members with the back-and-forth direction as a longitudinal direction.

The foot holder 216 having an elongated plate shape connects the left support portion 214 and the right support portion 215. A pedal 208 is provided on the foot holder 216. The worker may use the pedal 208 to adjust a feed speed of the cloth. A control box 3 is fixed at the lower face of the top board 211. The control box 3 stores a control substrate having a CPU 200 and the like mounted thereon. The control box 3 is electrically connected to the bonding machine 2, the operation panel 210, and the pedal 208.

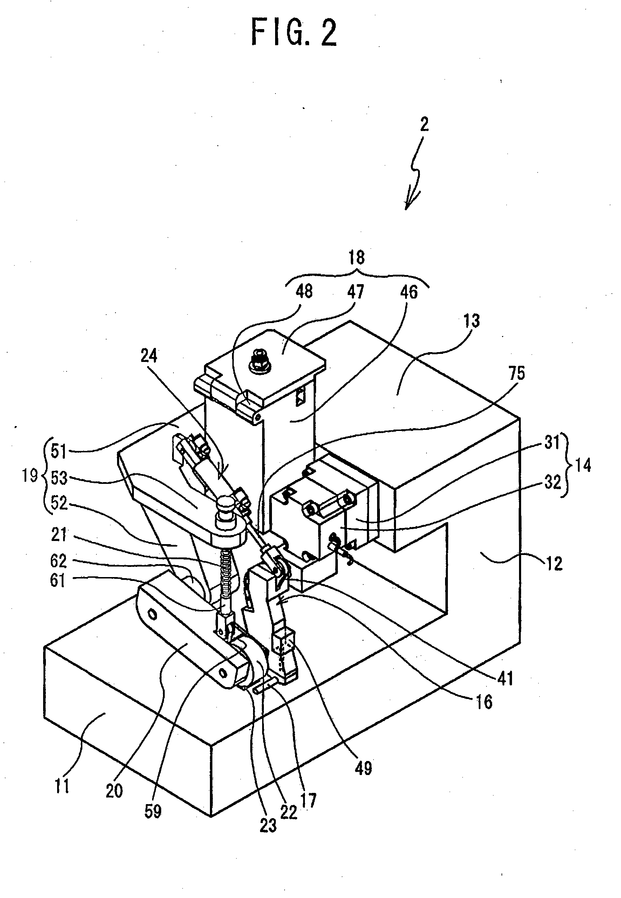

The configuration of the bonding machine 2 will be described with reference to Figs. 2 to 4. As shown in Figs. 2 and 3, the bonding machine 2 includes a bed portion 11, a pillar portion 12, and an arm portion 13. The bed portion 11 has a substantially rectangular parallelepiped shape with the right-and-left direction as the longitudinal direction. The bed portion 11 is fixed on the top board 211 (see Fig. 1). The pillar portion 12 extends vertically upwards from the right end of the bed portion 11. The arm portion 13 is connected to the upper end of the pillar portion 12 and extends leftward from the left side of the pillar portion 12.

The bed portion 11 functions as a base that supports the pillar portion 12. The pillar portion 12 supports the arm portion 13.

As shown in Fig. 2, the left end of the arm portion 13 supports a pump casing 14, a storage chamber 18, and a beam portion 19, from front to back in this order.

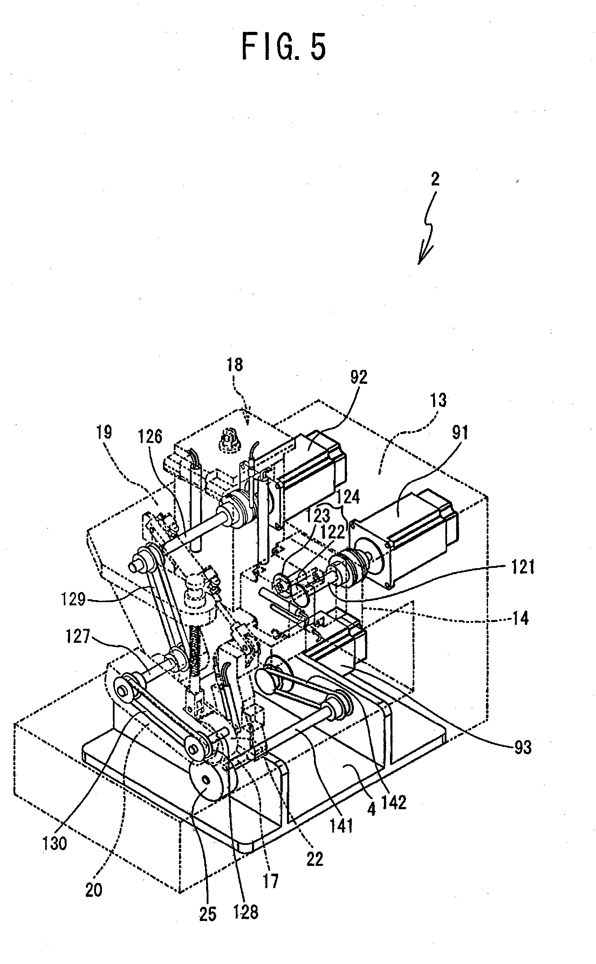

The pump casing 14 will be described. As shown in Figs. 2 and 3, the pump casing 14 includes a first pump casing 31 and a second pump casing 32. The first pump casing 31 is a substantially cubic member. The first pump casing 31 is fixed on the left side face of the arm portion 13. The first pump casing 31 includes therein a gear pump 124 (refer to Fig. 5) and the like. The gear pump 124 supplies an appropriate amount of adhesive to a nozzle 17 with high accuracy. The second pump casing 32 is a substantially rectangular parallelepiped member. The second pump casing 32 extends downward from the left end portion of the lower face of the first pump casing 31.

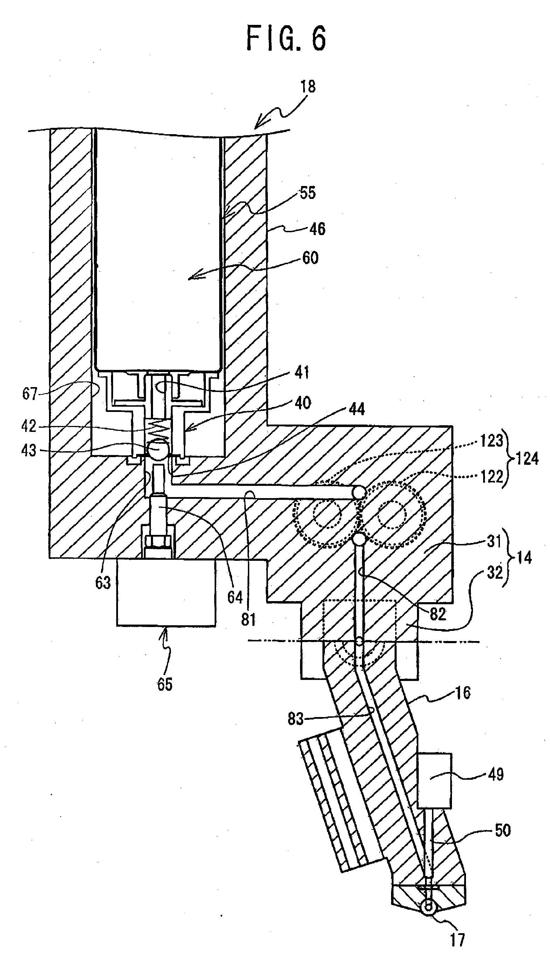

The second pump casing 32 includes a shaft portion 45 (refer to Fig. 3) on its left side. The shaft portion 45 is connected to the right side of an upper end portion of a support portion 16 and swingably supports the support portion 16 about the shaft portion 45. The pump casing 14 includes a channel 81 and a channel 82 (refer to Fig. 6), which will be described later. The channel 81 leads the adhesive from the storage chamber 18 to the gear pump 124. The channel 82 leads the adhesive from the gear pump 124 to the support portion 16.

As shown in Figs. 2 and 3, the support portion 16 has a substantially rectangular parallelepiped shape with the vertical direction as the longitudinal direction. A small gap is present between the lower end of the support portion 16 and the bed portion 11. The support portion 16 includes therein a channel 83 (see Fig. 6). The channel 83 leads the adhesive from the pump casing 14 to the nozzle 17. An air cylinder 49 that controls a valve 50 (see Fig. 6) capable of opening and closing the channel 83 is provided in the front part of the support portion 16. The support portion 16 includes the nozzle 17 at its lower end portion. The nozzle 17 extends leftward from the support portion 16. The support portion 16 includes a drive transmitting portion 41 at its upper end portion. The drive transmitting portion 41 supports the end portion of a movable portion 75 of an air cylinder 24.

The air cylinder 24 includes air inlet ports. An intake/exhaust hose (not shown) is connected to each of the air inlet ports. The cloth bonding apparatus 1 controls an intake and an exhaust of a compressed air through the air inlet ports. The air cylinder 24 has a piston in its body portion. The position of the piston moves in accordance with the intake and exhaust control. The movable portion 75 is connected to the piston. Thus, the end portion of the movable portion 75 moves back and forth along with the movement of the piston.

The support portion 16 swings back and forth about the shaft portion 45 along with the back-and-forth movement of the movable portion 75 of the air cylinder 24. The nozzle 17 moves along with the swing of the support portion 16 to a position where a bonding work is performed (a use position) and to a position where maintenance is performed (a maintenance position).

The nozzle 17 has a cylindrical shape. The nozzle 17 has a discharge port from which the adhesive is discharged at the bottom. When the worker performs the cloth bonding work, the discharge port opposes the bed portion 11. When performing the bonding work, the worker inserts the nozzle 17 between the two layers of oppositely arranged cloths. The gear pump 124 supplies the adhesive to the nozzle 17 through the channel 83 provided inside the support portion 16. The nozzle 17 discharges the adhesive from the discharge port onto the cloth. The adhesive may be applied on the surface of the lower cloth positioned below the nozzle 17.

As shown in Figs. 2 and 3, the storage chamber 18 has a substantially rectangular parallelepiped shape with the vertical direction as the longitudinal direction. The storage chamber 18 extends upward from the left side of the arm portion 13 and from the back of the pump casing 14. The storage chamber 18 includes a body portion 46, a cover portion 47, and a shaft portion 48. The body portion 46 has a bottomed tube shape having an opening at the top. The cover portion 47 covers the opening at the top of the body portion 46. The storage chamber 18 houses a cartridge 60 (see Fig. 6) in which the adhesive is filled. The body portion 46 has the shaft portion 48 at its upper end. The shaft portion 48 supports the cover portion 47in an openable/closable manner.

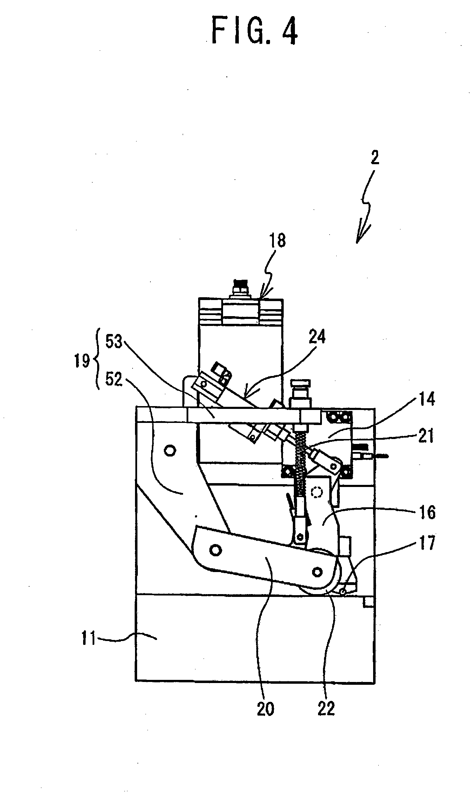

As shown in Fig. 2, the beam portion 19 includes a body portion 51, a spring support portion 53, and a column portion 52. The body portion 51 is a member extending horizontally leftward from the rear left end of the arm portion 13. The spring support portion 53 has a plate shape and extends horizontally forward from the left end portion of the body portion 51. As shown in Figs. 2 and 4, the column portion 52 extends obliquely downward from the body portion 51 at about 45 degrees relative to the horizontal plane. There is a gap between the lower end of the column portion 52 and the bed portion 11.

As shown in Fig. 2, the spring support portion 53 has a hole at the front end portion. The spring support portion 53 supports a shaft portion 61 in a vertically movable manner. The shaft portion 61 is inserted through a spring 21. The upper end part of the shaft portion 61 is inserted into the hole of the spring support portion 53. The column portion 52 has a shaft portion 62 extending horizontally leftward from the lower end part thereof. The shaft portion 62 supports a rear end portion of a roller holding portion 20. The roller holding portion 20 may swing a front end portion in the vertical direction with the shaft portion 62 as the center of swing. The body portion 51 is provided with the air cylinder 24 at the right side of the spring support portion 53.The air cylinder 24 is directed for switching the position of the support portion 16.

The roller holding portion 20 will be described. The front end portion of the roller holding portion 20 rotatably supports an upper feed roller 22 having a cylindrical shape. The upper feed roller 22 is positioned in the vicinity of the back of the nozzle 17. The roller holding portion 20 includes a shaft support portion 59 on the upper face of the front portion. The shaft support portion 59 supports the lower end of the shaft portion 61 inserted through the spring 21. The spring 21 is interposed between the spring support portion 53 and the lower end of the shaft portion 61. The spring 21 urges the shaft portion 61 downwards, thereby urging the roller holding portion 20 connected to the shaft portion 61 downwards.

As shown in Fig. 2, the bed portion 11 is provided with a hole 23 below the upper feed roller 22. A part of a lower feed roller 25 (refer to Fig. 5) slightly projects upwards from the hole 23. The lower feed roller 25 rotates along with the upper feed roller 22. The lower feed roller 25 and the upper feed roller 22 feed the cloths sandwiched therebetween from front to back.

The inner configuration of the bonding machine 2 will be described below with reference to Fig. 5. The bonding machine 2 includes therein a first motor 91, a second motor 92, a third motor 93, and the like.

The first motor 91 transmits a rotation drive force to the gear pump 124 via a rotary shaft 121 thereby driving the gear pump 124. The gear pump 124 includes a drive gear 122 and a driven gear 123. The drive gear 122 is fixed at the left end of the rotary shaft 121. The drive gear 122 rotates along with the rotary shaft 121. The driven gear 123 meshes with the drive gear 122. The first motor 91 is positioned inside the arm portion 13 and to the right side of the portion where the pump casing 14 is connected to the arm portion 13. The rotary shaft 121 extends inside the pump casing 14 leftward from the rotary shaft of the first motor 91. The drive gear 122 and the driven gear 123 supply an appropriate amount of the adhesive to the nozzle 17.

The second motor 92 transmits a rotation drive force to the upper feed roller 22 via the rotary shafts 126, 127, 128 and belts 129, 130 thereby driving the upper feed roller 22. The second motor 92 is positioned inside the arm portion 13 and to the right side of the portion where the beam portion 19 is connected with the arm portion 13. The rotary shaft 126 extends leftward from the rotary shaft of the second motor 92 and extends through the body portion 51. The left end of the rotary shaft 126 is positioned inside the column portion 52. The left end of the rotary shaft 126 supports a pulley. The right end of the rotary shaft 127 is positioned inside the lower end of the column portion 52 and the left end of the rotary shaft 127 is positioned inside the rear end portion of the roller holding portion 20. The right end and left end of the rotary shaft 127 each support a pulley. The rotary shaft 128 is a rotary shaft of the upper feed roller 22. The left end of the rotary shaft 128 is positioned inside the front end portion of the roller holding portion 20 and supports a pulley. The right end of the rotary shaft 128 projects from the front end portion of the roller holding portion 20 and supports the upper feed roller 22. The belt 129 is crossed between the pulley at the left end of the rotary shaft 126 and the pulley at the right end of the rotary shaft 127 inside the column portion 52. The belt 130 is crossed between the pulley at the left end of the rotary shaft 127 and the pulley at the left end of the rotary shaft 128 inside the roller holding portion 20. The upper feed roller 22 rotates along with the rotation of the second motor 92.

The third motor 93 transmits a rotation drive force to the lower feed roller 25 via a rotary shaft 141 and a belt 142 thereby driving the lower feed roller 25. The lower feed roller 25 is cylindrical and is fixed to the rotary shaft 141. The lower feed roller 25 is positioned below the upper feed roller 22 and inside the bed portion 11. The bed portion 11 has a support portion 4 therein. The support portion 4 rotatably supports the rotary shaft 141. The belt 142 is crossed between a pulley of a rotary shaft of the third motor 93 and a pulley at the right end of the rotary shaft 141 inside the bed portion 11. The lower feed roller 25 rotates along with the rotation of the third motor 93.

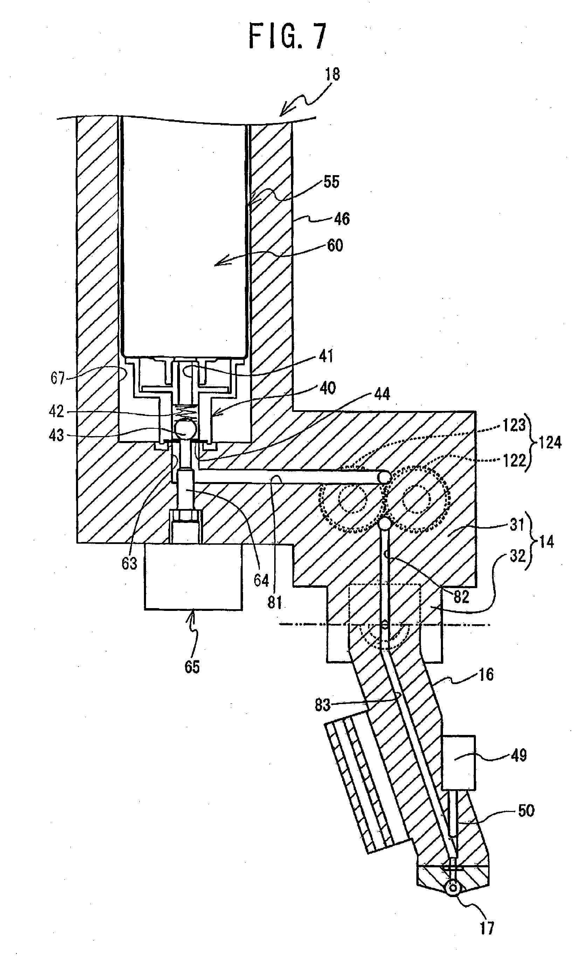

The inner configuration of the storage chamber 18 will be described with reference to Figs. 6 and 7. The body portion 46 of the storage chamber 18 includes a bottom wall and a peripheral wall. A hole 67 is provided inside the body portion 46. The hole 67 has a substantially cylindrical shape with the vertical direction as the longitudinal direction. The cloth bonding apparatus 1 houses the cartridge 60, in which an adhesive is filled, within the hole 67.

An air cylinder 65 is provided below the body portion 46. The position of a piston inside the air cylinder 65 moves in accordance with an intake and an exhaust of a compressed air through the air inlet port (not shown). A pressing portion 64 is connected to the piston. The upper end of the pressing portion 64 moves in the vertical direction along with the movement of the piston. A hole 63 is provided at the center of the bottom of the hole 67. The upper part of the pressing portion 64 projects upward from the bottom of the hole 63. The channel 81 is connected to the hole 63.

As shown in Fig. 6, the upper end of the pressing portion 64 is below the bottom surface of the hole 67 when the pressing portion 64 moves downward. As shown in Fig. 7, the upper end of the pressing portion 64 slightly projects upward from the bottom surface of the hole 67 when the pressing portion 64 moves upward.

The cartridge 60 will be described. The cartridge 60 includes a body portion 55 and a valve 40. The body portion 55 has a substantially cylindrical shape. The valve 40 is provided below the body portion 55. The cartridge 60 is housed in the hole 67 with the vertical direction as the longitudinal direction such that the valve 40 is positioned on its lower side. The diameter of the cylinder of the body portion 55 is substantially the same as the diameter of the hole 67. The body portion 55 is filled with the adhesive therein. The lower surface of the valve 40 contacts the bottom surface of the hole 67.

A passage 41 is provided in the valve 40. The passage 41 is a through hole that extends inside the valve 40 in the vertical direction. The upper end of the passage 41 is connected to the body portion 55. A hole 44 is provided at the lower end of the valve 40. The diameter of the hole 44 is smaller than the diameter of the passage 41. The lower end of the passage 41 is connected to the hole 44. The hole 44 is positioned above the hole 63 provided at the bottom surface of the hole 67 while the cartridge 60 is housed in the hole 67.

A sphere 43 and a spring 42 that urges the sphere 43 downward are provided inside the passage 41. The diameter of the sphere 43 is slightly smaller than the diameter of the passage 41. The diameter of the sphere 43 is about 1.5 times as large as the diameter of the hole 44. The spring 42 urges the sphere 43 downward. As shown in Fig. 6, the sphere 43 blocks the hole 44 from the inside of the passage 41.

The channels of the adhesive will be described with reference to Figs. 6 and 7. The channel 81 connected to the hole 63 is a through hole that extends toward the pump casing 14 in the bottom wall of the storage chamber 18. The channel 81 is a passage that leads the adhesive that has flowed out from the cartridge 60 to the gear pump 124.

The channel 81 leads from the storage chamber 18 to the center of the inside of the first pump casing 31 of the pump casing 14. The channel 81 bends to the right at a right angle at the center of the first pump casing 31 and leads to the upper end of a portion where the drive gear 122 and the driven gear 123 are meshed with each other.

The channel 82 is a passage that leads the adhesive that has passed through the gear pump 124 to the channel 83 of the support portion 16. The channel 82 extends leftward from the lower end of the portion where the drive gear 122 and the driven gear 123 are meshed with each other. The channel 82 extending leftward bends downward, bends to the left at its lower end, passes through the shaft portion 45 and then leads to the channel 83 inside the support portion 16.

The channel 83 is a passage that leads the adhesive that has flowed through the channel 82 to the nozzle 17. The channel 83 extends from the upper end to the lower end inside the support portion 16 and leads to the nozzle 17. The channel inside the nozzle 17 is a passage that guides the adhesive flowing through the channel 83 to the discharge port of the nozzle 17. The discharge port is provided below the left end of the nozzle 17. The adhesive is discharged from the discharge port to the outside.

The bar-shaped valve 50 is provided at the lower end portion of the channel 83. The valve 50 can open and close the channel 83. The position of a piston inside the air cylinder 49 moves in accordance with an intake and an exhaust of a compressed air through an air inlet port (not shown). The upper end of the valve 50 is connected to the piston. The lower end portion of the valve 50 moves in the vertical direction along with the movement of the piston, thereby to open or close the channel 83. When the valve 50 moves downward (see Fig. 6), the lower end portion of the valve 50 blocks the channel 83 and thus the channel 83 is closed. When the valve 50 moves upward (see Fig. 7), the lower end portion of the valve 50 does not block the channel 83. Thus, the channel 83 is opened.

There will be described how the adhesive flows from the storage chamber 18 via the pump casing 14 and the support portion 16 to the nozzle 17 with reference to Figs. 6 and 7. The worker loads the cartridge 60 into the body portion 46 of the storage chamber 18. As shown in Fig. 6, the pressing portion 64 moves downward while the worker is not performing the bonding work. In this case, the sphere 43 closes the hole 44 at the lower end of the valve 40. The adhesive inside the cartridge 60 does not flow out through the channel 81. The valve 50 moves downward. Thus, the channel 83 is closed. Thus, the adhesive remaining in the channel 83 is not discharged from the nozzle 17.

As shown in Fig. 7, the pressing portion 64 moves upward when the worker performs the bonding work. The pressing portion 64 pushes the sphere 43 upward. Thus, a gap is created between the hole 44 of the valve 40 and the sphere 43. The adhesive passes through the gap between the hole 44 and the sphere 43 and flows out of the cartridge 60. The adhesive then flows through the channel 81 to the gear pump 124. The valve 50 moves upward. Thus, the channel 83 is opened.

The first motor 91 (see Fig. 5) drives the drive gear 122 to rotate the drive gear 122 and the driven gear 123. The gear pump 124 feeds the adhesive that has flowed out of the cartridge 60 from the channel 81 toward the channel 82. The adhesive flows from the channel 82 toward the channel 83. Since the channel 83 is opened, the adhesive flows through the channel 83 to the nozzle 17. The adhesive is discharged from the nozzle 17 to the outside.

When the worker stops the bonding work, the first motor 91 stops. The drive gear 122 and the driven gear 123 stop rotating. The valve 50 moves downward to close the channel 83. Thus, the adhesive stops being discharged. The pressing portion 64 moves downward. The sphere 43 closes the hole 44 of the valve 40 and therefore the channel 81 is closed. Thus, the adhesive does not flow out of the cartridge 60.

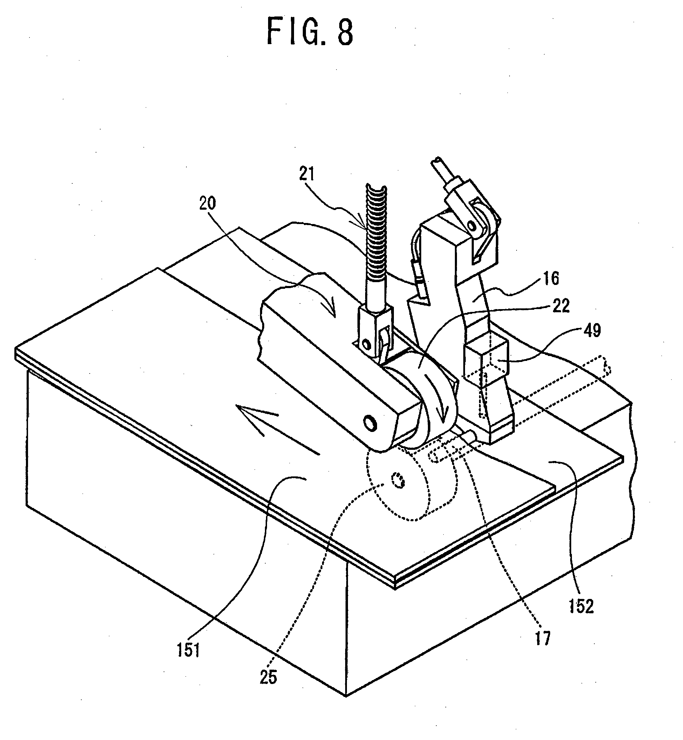

There will be described how the bonding machine 2 operates during the bonding operation of bonding an upper cloth 151 and a lower cloth 152 with reference to Figs. 6 to 8. In a case where performing the bonding operation is performed, the bonding machine 2 moves the movable portion 75 (refer to Fig. 2) of the first air cylinder 24 (refer to Fig. 2) ahead and moves the support portion 16 to the use position. The worker places the upper cloth 151 on the lower cloth 152. The worker places the nozzle 17 at a portion where the cloths are to be bonded. The upper feed roller 22 and the lower feed roller 25 sandwich the upper cloth 151 and the lower cloth 152 behind the nozzle 17.

The worker steps on and presses down the pedal 208 (see Fig. 1). The channel 81 and the channel 83 are opened. The adhesive flows out of the cartridge 60. The adhesive then flows through the channel 81 to the gear pump 124. The gear pump 124 is driven to feed the adhesive to the channels 82 and 83. The adhesive is discharged from the discharge port of the nozzle 17. The adhesive discharged from the discharge port adheres to the lower cloth 152.
The upper feed roller 22 and the lower feed roller 25 rotate in a direction in which the upper cloth 151 and the lower cloth 152 are fed from front to back. The spring 21 urges the upper feed roller 22 downward. Thus, the upper feed roller 22 and the lower feed roller 25 press and bond the upper cloth 151 and the lower cloth 152 together.

The worker stops stepping on and pressing down the pedal 208. The gear pump 124 stops being driven. The channel 81 and the channel 83 are to be closed. The adhesive stops being discharged. The upper feed roller 22 and the lower feed roller 25 stop rotating. Thus, the cloths stop being fed.

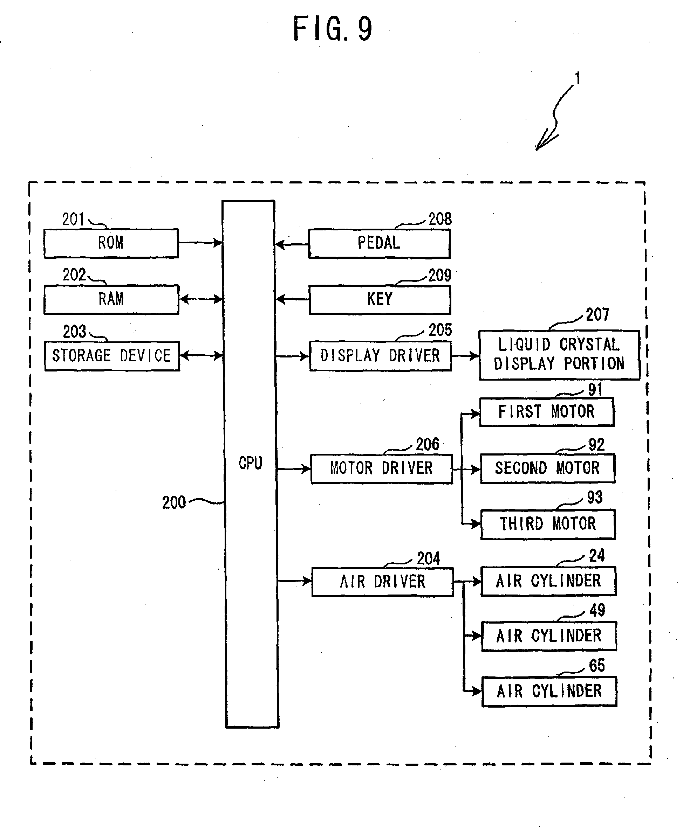

An electrical configuration of the cloth bonding apparatus 1 will be described with reference to Fig. 9. The cloth bonding apparatus 1 includes a CPU 200, a ROM 201, a RAM 202, and a storage device 203. The CPU 200 performs reception processing and control processing. The reception processing is a processing for receiving input information from the keys 209, the pedal 208, and the like. The control processing is a processing for controlling the motors and the like. The ROM 201 stores programs to be executed by the CPU 200 and various default parameters and the like. The RAM 202 temporarily stores timers, counters, flags, and the like. The storage device 203 stores various setting information inputted by the worker. The CPU 200 is electrically connected to the ROM 201, the RAM 202, and the storage device 203, respectively.

The pedal 208 is electrically connected with the CPU 200. The worker may use the pedal 208 to adjust the feed speed of the cloths. The CPU 200 recognizes an amount by which the pedal 208 is pressed down. The CPU 200 determines a rotation speed of the upper feed roller 22 and the lower feed roller 25, and rotation speed of the drive gear 122 and the driven gear 123, on the basis of the recognized adjustment amount of the pedal 208.

The keys 209 is electrically connected to the CPU 200. The worker uses the keys 209 to enter various items of operation setting information. The CPU 200 recognizes the press status of the keys 209 by the worker. The CPU 200 stores various items of operation setting information in the storage device 203 based on the recognized press status of the keys 209. The storage device 203 stores a shutoff time therein. The shutoff time is a time after the worker has stopped the pressing of the pedal 208 until the pressing portion 64 moves to close the valve 40.

A display driver 205 is electrically connected with the CPU 200. The LCD portion 207 is electrically connected with the display driver 205. The CPU 200 displays desired information on the LCD portion 207 via the display driver 205.

A motor driver 206 is electrically connected with the CPU 200. The motors 91 to 93 each are electrically connected with the motor driver 206. The CPU 200 controls the motors 91 to 93 via the motor driver 206.

The air driver 204 is electrically connected to the CPU 200. The air driver 204 is electrically connected to the air cylinders 24, 49 and 65. The CPU 200 controls the pressure of the air to be fed into the air inlet ports of the air cylinders 24, 49 and 65 via the air driver 204.

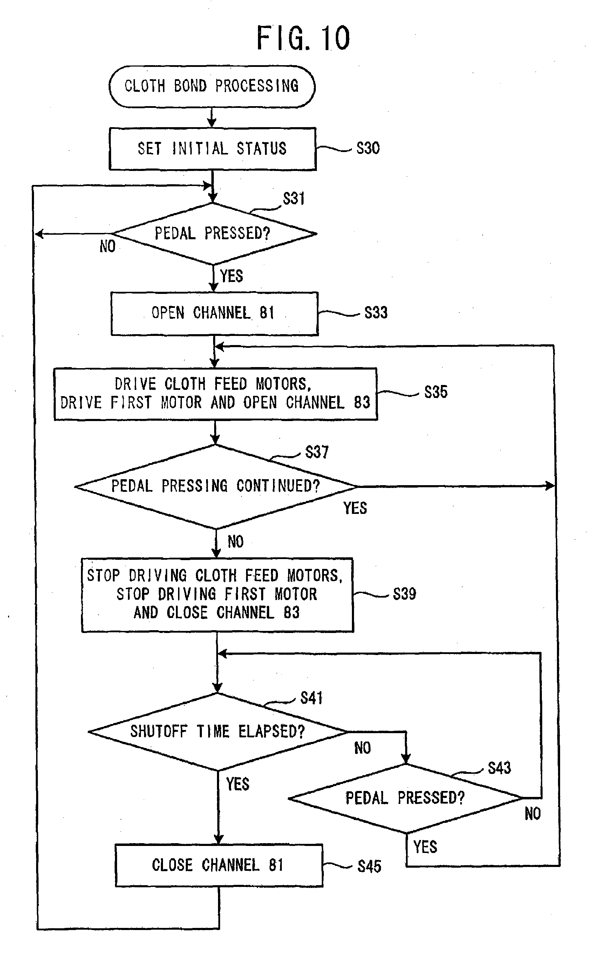

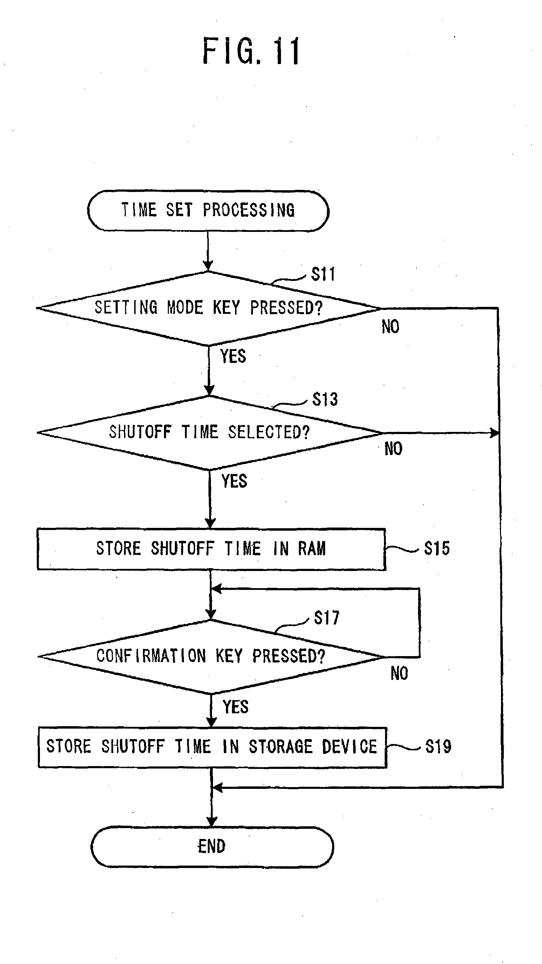

Various processings (cloth bond processing, time set processing) will be described with reference to Figs. 10 and 11. The CPU 200 performs the cloth bond processing and the time set processing. The CPU 200 starts the cloth bond processing when a power is turned on. When detecting that the keys 209 is pressed, the CPU 200 starts the time set processing.

The cloth bond processing will be described with reference to Fig. 10. The CPU 200 controls the air cylinder 65 and the air cylinder 49 so as to close the channel 81 and the channel 83 (S30).

The CPU 200 determines whether the worker has stepped on and pressed down the pedal 208 (S31). In a case the worker has not stepped on and pressed down the pedal 208 (S31: NO), the processing returns to step S31. The CPU 200 monitors the pressing of the pedal 208 by the worker. In the case where the CPU 200 detects that the pedal 208 is pressed (S31: YES), the CPU 200 controls the air cylinder 65 to move the piston and thereby moves the pressing portion 64 upward. The pressing portion 64 pushes the sphere 43 of the valve 40 upward. A gap is created between the hole 44 and the sphere 43. The adhesive flows through the gap to the outside of the cartridge 60. Thus the channel 81 is opened (S33). The adhesive flows through the channel 81 to the gear pump 124.

The CPU 200 determines rotation speeds of the motors depending on the pressing amount of the pedal 208. The CPU 200 rotates the second motor 92 and the third motor 93 (hereinafter collectively referred to as "cloth feed motors") at the determined rotation speeds. The upper feed roller 22 and the lower feed roller 25 feed the cloths. The CPU 200 rotates the first motor 91 at the determined rotation speed. The first motor 91 drives the gear pump 124 to feed the adhesive from the channel 81 toward the channel 82. The CPU 200 controls the air cylinder 49 to move the piston and thereby moves the valve 50 upward. Thus, the channel 83 is opened. The adhesive flows from the channel 83 toward the nozzle 17 and is discharged from the nozzle 17 (S35).

The CPU 200 determines whether the worker is continuously stepping on and pressing down the pedal 208 (S37). In a case where the worker is continuously stepping on and pressing down the pedal 208 (S37: YES), the processing returns to step S35. The CPU 200 continuously feeds the cloths at the speed depending on the pressing amount of the pedal 208 to bond the cloths.

In a case where the worker has stopped the pressing of the pedal 208 (S37: NO), the CPU 200 stops the rotation of the cloth feed motors. The upper feed roller 22 and the lower feed roller 25 stop rotating. The CPU 200 stops rotating the first motor 91. The gear pump 124 stops being driven. The CPU 200 controls the air cylinder 49 to move the piston and thereby moves the valve 50 downward. Thus, the channel 83 is closed (S39).

The CPU 200 reads a shutoff time stored in the storage device 203. The CPU 200 monitors an elapsed time after the worker has stopped the pressing of the pedal 208 (S41). In a case where the elapsed time is less than the shutoff time (S41: NO), the CPU 200 determines whether the worker has stepped on and pressed down the pedal 208 again (S43). When the worker has not stepped on and pressed down the pedal 208 (S43: NO), the processing returns to step S41. The CPU 200 monitors whether the worker has stepped on and pressed down the pedal 208 again. In a case where the worker has stepped on and pressed down the pedal 208 again (S43: YES), the processing returns to step S35. The CPU 200 feeds and bonds the cloths at the speed depending on the pressing amount.

When the elapsed time becomes equal to or more than the shutoff time (S41: YES), the CPU 200 controls the air cylinder 65 to move the piston and thereby moves the pressing portion 64 downward. Thus, the channel 81 is closed (S45). The adhesive inside the cartridge 60 stops flowing out.

The time set processing will be described with reference to Fig. 11. The CPU 200 determines whether the worker has pressed a setting mode key among the keys 209 (S11). The setting mode key is a key directed for switching a mode of the cloth bonding apparatus 1 to a setting mode. In a case where the worker has not pressed the setting mode key (S11: NO), the CPU 200 terminates the processing.

In a case where the worker has pressed the setting mode key (S11: YES), the CPU 200 determines whether the worker has selected the shutoff time input menu (S13). In a case where the worker has selected an input menu other than the shutoff time input menu (S13: NO), the processing is terminated.

In a case where the worker has selected the shutoff time input menu (S13: YES), the CPU 200 acquires a shutoff time input via the keys 209 by the worker. The CPU 200 temporarily stores the acquired shutoff time in the RAM 202 (S15). The CPU 200 waits while the worker does not press a confirmation key for confirming the input shutoff time (S17: NO). In a case where the worker has pressed the confirmation key (S 17: YES), the CPU 200 stores the shutoff time stored in the RAM 202 into the nonvolatile storage device 203 (S 19) and terminates the processing. The shutoff time is preferably about 5 seconds in the present embodiment.

As described above, the cloth bonding apparatus 1 controls opening and closing of the channel 81 at the upstream side of the gear pump 124. The CPU 200 controls opening and closing of the channel 83 at the downstream side of the gear pump 124. Thus, the cloth bonding apparatus 1 can keep a pressure inside the channels 81 to 83 constant. In the cloth bonding apparatus 1, in a case where a meshing accuracy is low between the drive gear 122 and the driven gear 123, a gap is created between the drive gear 122 and the driven gear 123. In the above case, the adhesive flows from the upstream side to the downstream side due to gravity even when the gear pump 124 is not being driven. For example, in a case where only the channel 83 at the downstream side of the gear pump 124 is controlled to be opened and closed, the adhesive flows out from the inside of the cartridge 60 to the channel 81 even when the gear pump 124 stops being driven. In this case, the pressure inside the channels 81 to 83 increases. Thus, when discharge of the adhesive is restarted, a larger amount of the adhesive than an appropriate amount may be discharged from the nozzle 17 due to the increased pressure. In another example, in a case where only the channel 81 at the upstream side of the gear pump 124 is controlled to be opened and closed, the adhesive is slightly discharged from the nozzle 17 even after the gear pump 124 stops being driven. In this case, the pressure inside the channels 81 to 83 decreases. Thus, when the discharge of the adhesive is restarted, the appropriate amount of the adhesive may not be discharged from the nozzle 17.

To the contrary, the cloth bonding apparatus 1 performs the open/close control both in the channel 81 at the upstream side of the gear pump 124 and in the channel 83 at the downstream side thereof. Therefore, the cloth bonding apparatus 1 can keep the pressure inside the channels 81 to 83 constant. Therefore, when the discharge of the adhesive is restarted, the cloth bonding apparatus 1 can discharge the appropriate amount of adhesive from the nozzle 17.

The cartridge 60 can be housed in the storage chamber 18. Thus, adhesive types can be changed by replacing the cartridge 60 during the work. The cloth bonding apparatus 1 can use the valve 40 of the cartridge 60 as a valve for opening and closing the channel 81. The channel 81 can be opened or closed, even if the channel 81 is not provided with a separate valve. In a case where the adhesive is filled in the storage chamber 18 without using the cartridge 60, a valve may be provided in the channel 81.

The cloth bonding apparatus can adjust a time after the worker has stopped the pressing of the pedal 208 up to the closing of the channel 81 by moving the pressing portion 64. For example, a larger amount of low-viscosity adhesive flows through the gap between the drive gear 122 and the driven gear 123 to the downstream side when the gear pump 124 stops. It is thus preferable in this case that the time up to the closing of the channel 81 after the worker has stopped the pressing of the pedal 208 is short.

A smaller amount of high-viscosity adhesive flows through the gap between the drive gear 122 and the driven gear 123 to the downstream side when the gear pump 124 stops. Thus, when the channel 83 is closed, the pressure inside the channels 81 to 83 does not rapidly change even when the channel 81 is opened. For the above reason, in the case of the high-viscosity adhesive is used, the time up to the closing of the channel 81 after the worker has stopped the pressing of the pedal 208 may be set to be longer. If the shutoff time is set to be longer, the channel 81 can be kept opened. Therefore, the air driver 204 will not be driven uselessly even when the pressing of the pedal 208 is detected again in step S43. As described above, the cloth bonding apparatus 1 can adjust the shutoff time thereby to be able to adjust the timing of closing the channel 81 depending on the viscosity of the adhesive.

For example, in a case where the worker performs a work in which the worker frequently switch the operation state of the pedal 208 in a short time, the time up to the closing of the channel 81 after the worker has stopped the pressing of the pedal 208 is preferably longer. This is because when the air driver 204 is frequently driven, the air driver 204 may be damaged. The cloth bonding apparatus 1 can adjust the shutoff time thereby to be able to prevent the open/close control of the channel 81 from being performed frequently.

The channels 81 to 83 correspond to the "channel" of the present invention and the gear pump 124 corresponds to the "pump mechanism" of the present invention. The valve 50 corresponds to the "downstream valve" of the present invention and the air cylinder 49 corresponds to the "actuator" of the present invention. The valve 40 corresponds to the "upstream valve" and the "cartridge valve" of the present invention, and the air cylinder 65 corresponds to the "actuator" of the present invention. The pedal 208 corresponds to the "input portion" of the present invention. The CPU 200 that performs the processings in step S33 and S35 corresponds to the "first control portion" of the present invention and the CPU 200 that performs the processings in step S39 and S45 corresponds to the "second control portion" of the present invention. The CPU 200 that performs the processing in step S41 corresponds to the "measuring portion" of the present invention. The CPU 200 that performs the time set processing in Fig. 11 corresponds to the "time setting portion" of the present invention.

In the above embodiment, the cloth bonding apparatus 1 opens and closes the valve 40 of the cartridge 60 thereby to open and close the channel 81. The cloth bonding apparatus 1 may provided with a separate valve in the channel 81. The cloth bonding apparatus 1 may open and close the channel 81 by opening and closing the valve. Hereinafter, a modified embodiment of the present invention will be described.

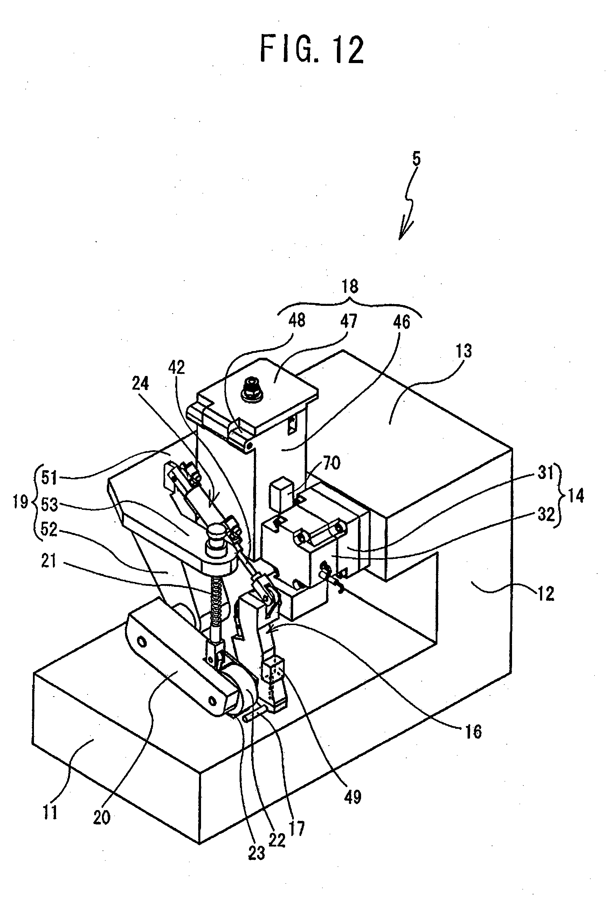

A bonding machine 5 according to the modified embodiment of the present invention will be described with reference to Figs. 12 to 14. Like reference numerals are denoted to like components identical to those in the above embodiment and thus the description thereof will be omitted. The bonding machine 5 directly fills the adhesive in the body portion 46 of the storage chamber 18. The bonding machine 5 includes an air cylinder 70 and a valve 71 instead of the air cylinder 65 and the valve 40.

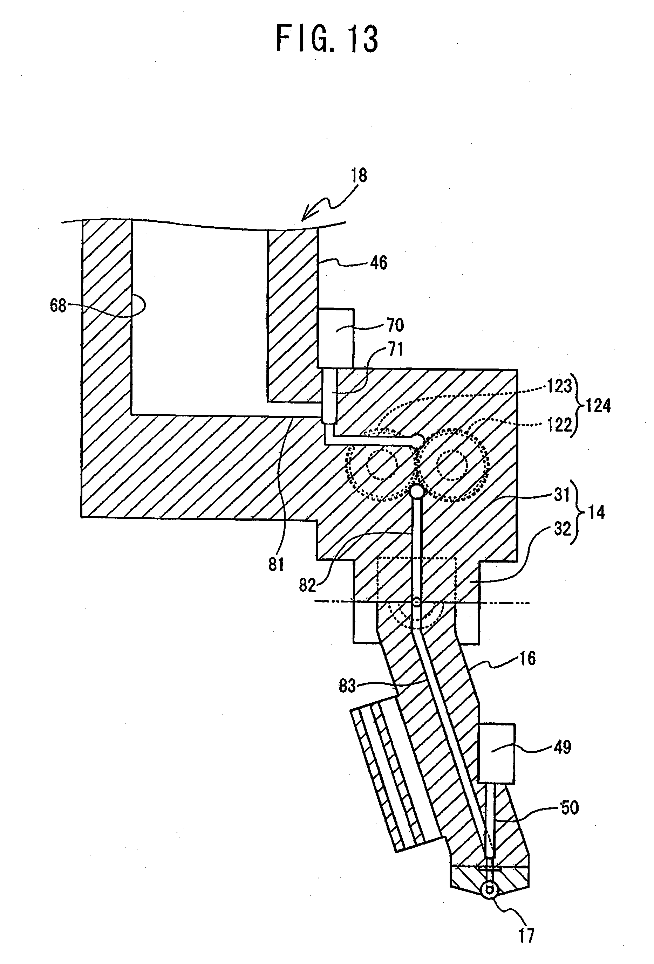

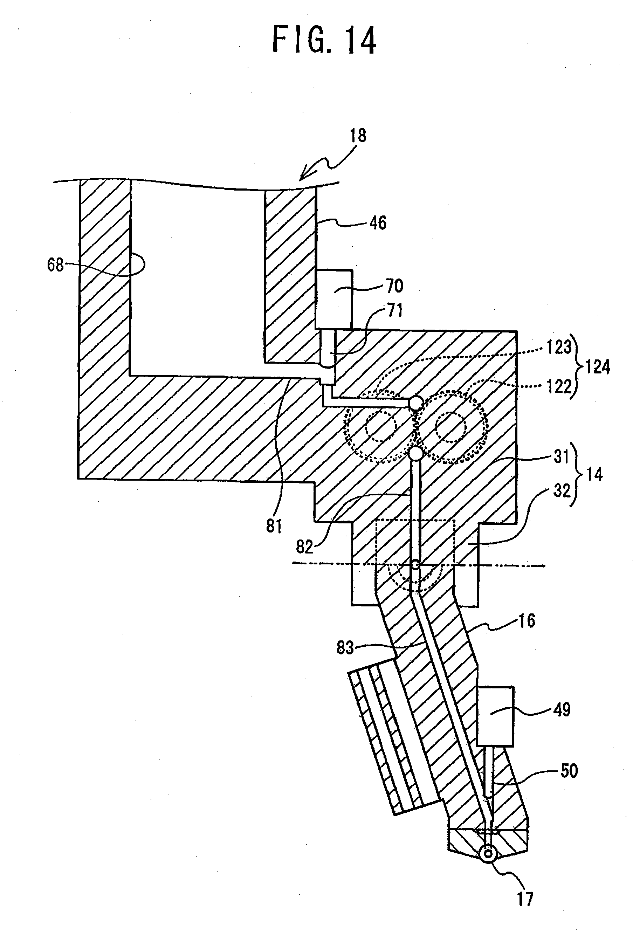

As shown in Fig. 12, the bonding machine 5 includes the air cylinder 70. The air cylinder 70 is provided at the front side surface of the body portion 46 of the storage chamber 18. As shown in Fig. 13, a hole 68 is provided inside the body portion 46. The channel 81 is connected to the hole 68. The valve 71 is provided in the middle of the channel 81. The valve 71 can open and close the channel 81. The air cylinder 70 is provided with a piston therein. The position of the piston inside the air cylinder 70 moves in accordance with an intake and an exhaust of a compressed air through air inlet ports (not shown). The upper end of the valve 71 is connected to the piston. When the piston moves, the lower end portion of the valve 71 moves in the vertical direction and thus the channel 81 is opened and closed. When the valve 71 moves downward (Fig. 13), the lower end portion of the valve 71 blocks the channel 81 and thus the channel 81 is closed. When the valve 71 moves upward (Fig. 14), the lower end portion of the valve 71 does not block the channel 81. Thus, the channel 83 is opened.

As shown in Fig. 14, when the worker has stepped on and pressed down the pedal 208, the piston of the air cylinder 70 moves. The valve 71 moves upward and thus the channel 81 is opened. The adhesive inside the storage chamber 18 flows through the channel 81 to the gear pump 124. The piston of the air cylinder 49 moves. The valve 50 moves upward and the channel 83 is open.

The CPU 200 (see Fig. 9) of the bonding machine 5 rotates the first motor 91 to drive the gear pump 124. The adhesive flows from the channel 81 to the channels 82 and 83. Since the channel 83 is open. The adhesive flows through the channel 83 to the nozzle 17 and is discharged from the discharge port.

As shown in Fig. 13, in a case where the worker stopped pressing of the pedal 208, the CPU 200 of the bonding machine 5 stops driving the gear pump 124. The CPU 200 of the bonding machine 5 moves the piston of the air cylinder 49. The valve 50 moves downward to close the channel 83. The CPU 200 of the bonding machine 5 moves the piston of the air cylinder 70. The valve 71 moves downward and thus the channel 81 is closed. Therefore, the adhesive stops being discharged.

The electrical configuration of the bonding machine 5 will be described. The bonding machine 5 is different from the bonding machine 2 shown in Fig. 9 in terms of the electric configuration in that the air cylinder 70 is provided instead of the air cylinder 65, and other configuration is the same.

The cloth bond processing in the modified embodiment will be described with reference to Fig. 10. In a case where the CPU 200 detects the pressing of the pedal 208 (S31: YES), the CPU 200 controls the air cylinder 70 to move the piston, thereby moves the valve 71 upward. Thus, the channel 81 is opened (S33). The CPU 200 rotates the cloth feed motors and the first motor. The CPU 200 controls the air cylinder 49 to move the piston, thereby moves the valve 50 upward. Thus, the channel 83 is opened (S35). The adhesive flows from the storage chamber 18 through the channels 81 to 83 to the nozzle 17, and is discharged from the nozzle 17.

In a case where the worker has stopped pressing of the pedal 208 (S37: NO), the CPU 200 stops rotating the cloth feed motors and the first motor. The CPU 200 controls the air cylinder 49 to move the piston, thereby moves the valve 50 downward. Thus, the channel 83 is closed (S39). The CPU 200 monitors the elapsed time after the worker has stopped pressing of the pedal 208 (S41). When the elapsed time becomes equal to or more than the shutoff time (S41: YES), the CPU 200 controls the air cylinder 70 to move the piston, thereby moves the valve 71 downward. Thus, the channel 81 is closed (S45). The adhesive stops being discharged.

As described above, the cloth bonding apparatus 1 includes the air cylinder 70 and the valve 71 in the channel 81. The cloth bonding apparatus 1 can keep the pressure inside the channels 81 to 83 constant. The cloth bonding apparatus 1 can directly fill the adhesive in the storage chamber 18 without using the cartridge 60.

The valve 71 corresponds to the "upstream valve" of the present invention and the air cylinder 70 corresponds to the "actuator" of the present invention.

The above method for opening and closing the channels by the valves (valve 40, valve 50, and valve 71) is an example. The valves may open and close the channels with other opening/closing method.

The valve 50 may be provided in any position in the channels at the downstream side of the gear pump 124. For example, the valve 50 may be provided in the vicinity of the downstream side of the gear pump 124 (at the upper end portion of the channel 82). The valve 40 and the valve 71 may be provided in any position in the channels at the upstream side of the gear pump 124. For example, the valve 40 may be provided in the vicinity of the upstream side of the gear pump 124 (at the front end portion of the channel 81).

Examples in which the cloth bonding apparatus bonds separate pieces of cloths together are given in the above-described embodiment and the modified embodiment. However, the cloth bonding apparatus may bond folded portions of one folded cloth. In other words, the cloth bonding apparatus may bond two layers of cloth(s).

## Claims

1. A cloth bonding apparatus comprising:
a nozzle (17) through which an adhesive is dischargeable onto a cloth (153);
a storage chamber (18) that is adapted to store the adhesive therein;
a channel (81, 82, 83) through which the adhesive stored in the storage chamber is supplied to the nozzle;
a pump mechanism (124) adapted to supply the adhesive stored in the storage chamber through the channel to the nozzle;
a downstream valve (50) that is provided at a downstream side of the pump mechanism **characterized in that**
the pump mechanism (124) and the downstream valve (50) are provided in the channel, and
the cloth bonding apparatus further comprises
an upstream valve (40, 71) that is provided.at an upstream side of the pump mechanism in the channel;
an input portion (208) through which an instruction of enabling or disabling a discharge of the adhesive from the nozzle is input;
a first control portion (200) that, in a case where the instruction of enabling the discharge of the adhesive is input through the input portion, controls the downstream valve and the upstream valve to open the channel and controls the pump mechanism thereby supplying the adhesive to the nozzle; and
a second control portion (200) that, in a case where the instruction of disabling the discharge of the adhesive is input through the input portion, controls the downstream valve and the upstream valve to close the channel and controls the pump mechanism thereby stopping supplying the adhesive to the nozzle.

2. The cloth bonding apparatus according to claim 1, further comprising an actuator (65) that opens and closes a cartridge valve (40) that is provided in a cartridge (60) which is filled with the adhesive and which is housed in the storage chamber,
wherein:
the upstream valve is configured as the cartridge valve; and
the first control portion and the second control portion open and close the channel, respectively by controlling the actuator to open and close the cartridge valve.

3. The cloth bonding apparatus according to claim 1, further comprising an actuator (49, 65, 70) that drives at least one of the upstream valve and the downstream valve.

4. The cloth bonding apparatus according to claim 2 or 3, wherein the actuator is an air cylinder (49, 65, 70).

5. The cloth bonding apparatus according to any one of claims 1 to 4,
wherein the pump mechanism is a gear pump (124).

6. The cloth bonding apparatus according to any of claims 1 to 5, further comprising:
a measuring portion (200) that measures an elapsed time after the instruction of disabling to the discharge of the adhesive is input through the input portion; and
a time setting portion (200) that sets a time after the instruction of disabling the discharge of the adhesive is input through the input portion until the upstream valve closes the channel,
wherein the second control portion controls the upstream valve to close the channel when the elapsed time measured by the measuring portion reaches the time set by the time setting portion.

## Patentansprüche

1. Tuchfügegerät mit:
einer Düse (17), durch die ein Klebemittel auf ein Tuch (153) ausgelassen werden kann;
einer Speicherkammer (18), die daran angepasst ist, das Klebemittel darin zu speichern;
einem Kanal (81, 82, 83), durch den das in der Speicherkammer gespeicherte Klebemittel zu der Düse zugeführt wird;
einem Pumpmechanismus (124), der daran angepasst ist, das in der Speicherkammer gespeicherte Klebemittel durch den Kanal zu der Düse zuzuführen;
einem stromabwärtigen Ventil (50), das an einer stromabwärtigen Seite des Pumpmechanismus vorgesehen ist,
**dadurch gekennzeichnet, dass**
der Pumpmechanismus (124) und das stromabwärtige Ventil (50) in dem Kanal vorgesehen sind, und
das Tuchfügegerät des Weiteren folgendes aufweist:
ein stromaufwärtiges Ventil (40, 71), das an einer stromaufwärtigen Seite des Pumpmechanismus in dem Kanal vorgesehen ist;
einen Eingabeabschnitt (208), durch den ein Befehl zum Aktivieren oder Deaktivieren eines Auslassens des Klebemittels aus der Düse eingegeben wird;
einen ersten Steuerabschnitt (200), der, falls der Befehl zum Aktivieren des Auslassens des Klebemittels durch den Eingabeabschnitt eingegeben wird, das stromabwärtige Ventil und das stromaufwärtige Ventil zum Öffnen des Kanals steuert und den Pumpmechanismus steuert, um dadurch das Klebemittel zu der Düse zuzuführen; und
einen zweiten Steuerabschnitt (200), der, falls der Befehl zum Deaktivieren des Auslassens des Klebemittels durch den Eingabeabschnitt eingegeben wird, das stromabwärtige Ventil und das stromaufwärtige Ventil zum Schließen des Kanals steuert und den Pumpmechanismus steuert, um dadurch die Zufuhr des Klebemittels zu der Düse zu stoppen.

2. Tuchfügegerät gemäß Anspruch 1, des Weiteren mit einem Aktuator (65), der ein Kartuschenventil (40) öffnet und schließt, das in einer Kartusche (60) vorgesehen ist, die mit dem Klebemittel gefüllt ist und die in der Speicherkammer untergebracht ist, wobei:
das stromaufwärtige Ventil als das Kartuschenventil konfiguriert ist; und
der erste Steuerabschnitt und der zweite Steuerabschnitt den Kanal öffnen und schließen, indem der Aktuator zum Öffnen bzw. Schließen des Kartsuchenventils gesteuert wird.

3. Tuchfügegerät gemäß Anspruch 1, des Weiteren mit einem Aktuator (49, 65, 70), der zumindest das stromaufwärtige Ventil oder das stromabwärtige Ventil antreibt.

4. Tuchfügegerät gemäß Anspruch 2 oder 3, wobei der Aktuator ein Luftzylinder (49, 65, 70) ist.

5. Tuchfügegerät gemäß einem der Ansprüche 1 bis 4, wobei der Pumpmechanismus eine Zahnradpumpe (124) ist.

6. Tuchfügegerät gemäß einem der Ansprüche 1 bis 5, des Weiteren mit:
einem Messabschnitt (200), der eine verstrichene Zeit misst, nachdem der Befehl zum Deaktivieren des Auslassens des Klebemittels durch den Eingabeabschnitt eingegeben wurde; und
einen Zeitfestlegungsabschnitt (200), der eine Zeit nach dem Eingeben des Befehls zum Deaktivieren des Auslassens des Klebemittels durch den Eingabeabschnitt bis zum Schließen des Kanals durch das stromaufwärtige Ventil festlegt,
wobei der zweite Steuerabschnitt das stromaufwärtige Ventil zum Schließen des Kanals steuert, wenn die durch den Messabschnitt gemessene, verstrichene Zeit jene Zeit erreicht, die durch den Zeitfestlegungsabschnitt festgelegt ist.

## Revendications

1. Dispositif de soudage de tissu comprenant :
un injecteur (17) par l'intermédiaire duquel un adhésif peut être appliqué sur un tissu (153) ;
une chambre de stockage (18) qui est adaptée afin de stocker l'adhésif à l'intérieur ;
un canal (81, 82, 83) par lequel l'adhésif stocké dans la chambre de stockage est délivré à l'injecteur ;
un mécanisme de pompage (124) adapté afin de délivrer l'adhésif stocké dans la chambre de stockage par l'intermédiaire du canal à l'injecteur ;
une vanne aval (50) qui est agencée du côté aval du mécanisme de pompage, **caractérisé en ce que** :
le mécanisme de pompage (124) et la vanne aval (50) sont agencés dans le canal, et
le dispositif de soudage de tissu comprend en outre :
une vanne amont (40, 71) qui est agencée d'un côté amont du mécanisme de pompage sur le canal ;
une partie d'entrée (208) par l'intermédiaire de laquelle une instruction d'activation ou de désactivation de distribution d'adhésif à partir de l'injecteur est délivrée ;
une première partie de commande (200) qui, dans un cas dans lequel l'instruction d'activation de la distribution d'adhésif est entrée par l'intermédiaire de la partie d'entrée, commande la vanne aval et la vanne amont de manière à ouvrir le canal et commande le mécanisme de pompage délivrant ainsi l'adhésif à l'injecteur ; et
une seconde partie de commande (200) qui, dans un cas dans lequel l'instruction de désactivation de la distribution d'adhésif est entrée par l'intermédiaire de la partie d'entrée, commande la vanne aval et la vanne amont de manière à fermer le canal et commande le mécanisme de pompage arrêtant ainsi l'alimentation d'adhésif à l'injecteur.

2. Dispositif de soudage de tissu selon la revendication 1, comprenant en outre un actionneur (65) qui ouvre et ferme une vanne de cartouche (40) qui est agencée dans une cartouche (60) qui est remplie d'adhésif et qui est contenue dans la chambre de stockage,
dans lequel :
la vanne amont est configurée comme la vanne de cartouche ; et
la première partie de commande et la seconde partie de commande ouvrent et ferment respectivement le canal en commandant l'actionneur de manière à ouvrir et à fermer la vanne de cartouche.

3. Dispositif de soudage de tissu selon la revendication 1, comprenant en outre un actionneur (49, 65, 70) qui entraîne au moins l'une de la vanne amont et de la vanne aval.

4. Dispositif de soudage de tissu selon la revendication 2 ou 3, dans lequel l'actionneur est un vérin pneumatique (49, 65, 70).

5. Dispositif de soudage de tissu selon l'une quelconque des revendications 1 à 4, dans lequel le mécanisme de pompage est une pompe à engrenage (124).

6. Dispositif de soudage de tissu selon l'une quelconque des revendications 1 à 5, comprenant en outre :
une partie de mesure (200) qui mesure un temps écoulé depuis que l'instruction de désactivation de la distribution d'adhésif a été entrée par la partie d'entrée ; et
une partie de réglage de durée (200) qui règle une durée depuis l'entrée de l'instruction de désactivation de distribution d'adhésif par l'intermédiaire de la partie d'entrée jusqu'à la fermeture du canal par la vanne aval,
dans lequel la seconde partie de commande assure la commande de la fermeture du canal par la vanne aval lorsque la durée écoulée mesurée par la partie de mesure atteint la durée réglée par la partie de réglage de durée.
